# EUROPÄISCHE PATENTSCHRIFT

(11) **EP 2 813 742 B1**
(45) Veröffentlichungstag und Bekanntmachung des Hinweises auf die Patenterteilung: **22.05.2019**
(21) Anmeldenummer: 14157330.3
(22) Anmeldetag: 28.02.2014
(51) Int. Cl.: F16L 37/18, F16L 37/34, F16L 37/20, F16L 37/26, F16L 37/28

(54) **Schnellanschlusskupplung**
Rapid release coupling
Dispositif d'accouplement à raccord rapide

(30) Priorität: 01.03.2013 DE 202013100901 U
(43) Veröffentlichungstag der Anmeldung: 17.12.2014
(73) Patentinhaber: DILO Armaturen und Anlagen GmbH, 87727 Babenhausen (DE)
(72) Erfinder: Sieber, Peter, 89281 Altenstadt (DE); Kohler, Robert, 89297 Messhofen (DE); Knoll, Werner, 89293 Kellmünz (DE)
(74) Vertreter: Pfister, Stefan Helmut Ulrich

(56) Entgegenhaltungen:
- EP-A2- 1 998 097
- DE-A1- 2 138 313
- DE-U1-202010 014 532
- US-A- 2 421 178
- US-A- 3 330 299
- US-A- 4 103 712

## Beschreibung

Die Erfindung betrifft eine Schnellanschlusskupplung, umfassend ein erstes Medienleitungsendstück, ein zweites Medienleitungsendstück, ein an dem ersten Medienleitungsendstück vorgesehenes Kupplungsstück und ein mit dem Kupplungsstück in Wirkverbindung bringbares, an dem zweiten Medienleitungsendstück vorgesehenes Kupplungsgegenstück.

Bei der Verbindung von Medienleitungen, die beispielsweise zur Zuführung von Medien wie Flüssigkeiten oder Gasen dienen, werden herkömmlicher Weise Schnellanschlusskupplungen verwendet. Diese Schnellanschlusskupplungen erlauben einen zügigen, meist nur wenige Handgriffe benötigenden Anschluss eines Kupplungsstückes beziehungsweise eines das Kupplungsstück aufweisenden Medienleitungsendstückes mit einem zweiten Medienleitungsendstück, beispielsweise einem fest in einem Tank oder dergleichen festgelegte Kupplungsstück. Nachteilig bei bekannten Schnellanschlusskupplungen ist, dass in einem ersten Verbindungsbeziehungsweise Kupplungsschritt die beiden Medienleitungsendstücke in Kontakt gebracht werden. Danach werden in der Regel im Medienleitungsendstück vorgesehene Ventile oder Kupplungen miteinander verbunden und erst im letzten Schritt erfolgt, beispielsweise durch Umlegen eines Hebels ein dichtes Kuppeln der Kupplungsstücke beziehungsweise Medienleitungsendstücke.

Als nachteilig erweist es sich in diesem Zusammenhang, dass der Kupplungsvorgang trotz der wenigen notwendigen Handgriffe lange Zeit in Anspruch nimmt und nicht verhindert werden kann, dass die medienführende Leitung für einen bestimmten Zeitraum geöffnet ist, ohne dass eine dichte Verbindung zwischen den beiden Medienleitungsendstücken vorhanden ist. Es kann zum Austritt von Medien kommen, was insbesondere bei von unter Umweltschutzgesichtspunkten kritischen Medien als problematisch anzusehen ist.

Das Dokument US 3 330 299 A zeigt eine Kupplung, in welcher nach Herstellen einer dichten Verbindung zwischen zwei Teilen ein Hebel zu betätigen ist, um einen innenliegenden Schließmechanismus zu öffnen.

Das Dokument EP 1 998 097 A2 zeigt ebenfalls eine Kupplung, bei welcher ein manueller Eingriff zum Freigeben eines innenliegenden Schließmechanismus erforderlich ist.

Das Dokument US 2 421 178 A zeigt eine Verbindung zwischen zwei Leitungen ohne Schließmechanismus.

Das Dokument DE 2 138 313 A1 zeigt eine Kupplung mit einem Schließmechanismus, welcher einen geschlossenen und einen freigegebenen Zustand einnehmen kann, wobei zum Übergang zwischen den Zuständen ein Stellhebel zu betätigen ist.

Aufgabe der vorliegenden Erfindung ist es daher, eine Schnellanschlusskupplung zur Verfügung zu stellen, bei der eine Verbindung zwischen zwei Medienleitungsendstücken in schneller und einfacher Art und Weise hergestellt werden kann, ohne dass es zum Austritt beziehungsweise zur Leckage von in den Medienleitungen transportierten Medien, wie beispielsweise Gasen oder Flüssigkeiten kommt.

Diese Aufgabe wird gelöst durch eine wie eingangs beschriebene Schnellanschlusskupplung. Die Schnellanschlusskupplung zeichnet sich dadurch aus, dass über Kupplungsstück und Kupplungsgegenstück ein Koppeln und fluidisches Verbinden von erstem und zweitem Medienleitungsendstück gleichzeitig und leckagefrei durchführbar ist. Durch gleichzeitiges Koppeln und fluidisches Verbinden kommt es nicht zum Austritt von Medien aus den Medienleitungsendstücken, da zu keiner Zeit eine Öffnung der Medienleitungen gegenüber der Atmosphäre stattfindet.

Die Konfiguration der Schnellanschlusskupplung sieht in diesem Zusammenhang vor, dass das Kupplungsgegenstück durch das Kupplungsstück ergreifbar und in eine Verbindungsposition bringbar, insbesondere zieh- oder schiebbar ist. Im Innern der Medienleitungsendstücke ist ein Schließmechanismus der Schnellanschlusskupplung vorhanden. Die Schnellanschlusskupplung ist dazu ausgebildet, dass gleichzeitig mit einer Herstellung eines Dichtkontaktes zwischen Kupplungsstück und Kupplungsgegenstück eine Betätigung des Schließmechanismus zu dessen Freigabe erfolgt. Die Herstellung eines Dichtkontakts kann mit einem Ergreifen und Ziehen beziehungsweise Schieben verbunden sein. Die erfindungsgemäße Schnellanschlusskupplung stellt somit sicher, dass in dem gleichen Augenblick, in dem eine dichtende Verbindung der beiden Medienleitungsendstücke beziehungsweise von Kupplungsstück und Kupplungsgegenstück auch eine Betätigung des Schließmechanismus erfolgt. Das heißt, die freien Enden der Medienleitungsendstücke sind aufgrund des Ergreifens von Kupplungsgegenstück durch Kupplungsstück bereits in Dichtkontakt, wenn im Verbindungsvorgang die Freigabe des Schließmechanismus erfolgt. Ein Austreten von Medium an den aneinanderliegenden Endbereichen der Medienleitungsendstücke ist im Moment der Öffnung des Schließmechanismus bereits nicht mehr möglich, da eine dichte Kontaktierung stattgefunden hat.

Des weiteren ist vorgesehen, dass das Kupplungsstück eine Aufnahme für das Kupplungsgegenstück aufweist und die Aufnahme das Kupplungsgegenstück wenigstens abschnittsweise um- oder hintergreift, wobei die Aufnahme als in axialer Richtung und im Bezug auf das Kupplungsstück verschiebbare Hülse oder Halbhülse ausgebildet ist, wobei die klauenartige Aufnahme gegen die Kraft einer Feder der Schnellanschlusskupplung bewegbar angeordnet ist, wobei sich die Feder in oder an dem dem Kupplungsstück zugeordneten Medienleitungsendstück abstützt, und/oder ein von einem Endbereich der Feder umgriffener oder in den Endbereich der Feder einstehender Vorsprung vorgesehen ist.

Erfindungsgemäß ist vorgesehen, dass die Feder um das Kupplungsstück angeordnet ist, und dass eine Schließvorrichtung vorgesehen ist, die eine Verbindung aus Kupplungsgegenstück und Kupplungsstück in der Verbindungsposition festlegt und als Schließvorrichtung ein an der Aufnahme angelenkter, eine Schwenkachse aufweisender Arm mit wenigstens einer Führungskulisse vorgesehen ist, wobei in der Führungskulisse wenigstens ein an dem Kupplungsstück oder an dem dem Kupplungsstück zugeordneten Medienleitungsendstück vorgesehener Vorsprung oder Bolzen geführt ist
In diesem Zusammenhang ist auch vorgesehen, dass das Kupplungsstück eine klauenartige Aufnahme für das Kupplungsgegenstück aufweist, und die Aufnahme das Kupplungsgegenstück wenigstens abschnittsweise um oder hintergreift.

Unter einer klauenartigen Aufnahme zu verstehen ist in diesem Zusammenhang ein beispielsweise zwei Finger oder vorstehende Verlängerungen aufweisendes Kupplungsgegenstück, wobei das Kupplungsstück durch die beiden Finger beispielsweise halbkreisartig umschlossen werden kann. Das Kupplungsgegenstück verfügt im Gegenzug über einen Ring beziehungsweise Einschnitt oder dergleichen, der mit der klauenartigen Aufnahme in Eingriff bringbar ist. Durch den Eingriff von (klauenartiger) Aufnahme und Hinterschneidung am Kupplungsgegenstück kann somit eine geführte Verbindung beziehungsweise Annäherung von Kupplungsstück und Kupplungsgegenstück erfolgen. Hierdurch wird der Kontakt der Medienleitungsendstücke wesentlich verbessert und ein stabiler Dichtsitz hergestellt, der wirksam den Austritt von Medien verhindert.

Die klauenartige Aufnahme ist als in axialer Richtung des Kupplungsstückes verschiebbare Hülse beziehungsweise Halbhülse ausgebildet. Diese Hülse beziehungsweise Halbhülse umschließt teilweise das Kupplungsgegenstück und führt dieses beziehungsweise das Kupplungsstück auf das Kupplungsgegenstück zu. Durch die axiale Bewegungsrichtung der Hülse beziehungsweise Halbhülse wird nach Verbinden von Kupplungsstück und Kupplungsgegenstück über die Aufnahme beziehungsweise klauenartige Aufnahme die Bewegungsrichtung des Kupplungsvorganges festgelegt.

Als günstig wird angesehen, wenn an dem Kupplungsgegenstück ein insbesondere flanschartig ausgebildeter, sich radial nach außen erstreckender Vorsprung oder aber alternativ oder zusätzlich eine Einschnürung oder Hinterschneidung des Kupplungsgegenstückes vorgesehen ist. Vorsprung oder Einschnürung/Hinterschneidung sind dann bevorzugt mit einer in der (klauenartigen) Aufnahme beziehungsweise Hülse vorgesehenen Vertiefung oder Nut in Eingriff bringbar. Es wird somit eine formschlüssige Verbindung zwischen Kupplungsgegenstück und Kupplungsstück ermöglicht beziehungsweise durchgeführt, so dass ein Verrutschen oder Verschieben von Kupplungsstück und Kupplungsgegenstück wirksam verhindert wird und der Kupplungsvorgang zügig und geführt erfolgen kann.

Die klauenartige Aufnahme beziehungsweise die Hülse oder Halbhülse ist/sind gegen die Kraft einer Feder bewegbar. Die Feder stützt sich bevorzugt in oder an dem dem Kupplungsstück zugeordneten Medienleitungsendstück ab. Das Medienleitungsendstück stellt hierfür insbesondere in oder auf dessen stirnseitiger Abschlussfläche eine Abstützmöglichkeit, beispielsweise ein Kragen oder einen Rand, beziehungsweise eine Nut zur Verfügung. Hierin ist die Feder teilweise aufgenommen, festgelegt und geführt. Das Medienleitungsendstück beziehungsweise dessen stirnseitige Abschlussfläche weist bevorzugt ein von einem Endbereich der Feder umgriffenen oder in den Endbereich der Feder einstehenden Vorsprung auf. Hierdurch wird der Sitz der Feder und die Führung von Hülse oder Halbhülse beziehungsweise (klauenartiger) Aufnahme verbessert.

Nachdem Kupplungsstück und Kupplungsgegenstück in der Verbindungsposition festgelegt sind, erweist es sich als vorteilhaft, dass die Schnellanschlusskupplung eine Schließvorrichtung aufweist, um Kupplungsstück und Kupplungsgegenstück bis zum Entkoppeln in der Verbindungs- beziehungsweise Verriegelungsposition festzulegen oder zu verriegeln.

In diesem Zusammenhang wird es als günstig angesehen, wenn die Schließvorrichtung als an der Aufnahme, der Hülse beziehungsweise der Halbhülse angelenkter, eine Schwenkachse aufweisender Arm oder Hebel mit wenigstens einer Führungskulisse ausgebildet ist. In der Führungskulisse ist wenigstens ein an dem Kupplungsstück oder an dem dem Kupplungsstück zugeordneten Medienleitungsendstück vorgesehener Vorsprung oder Bolzen geführt. Selbstverständlich bleibt die Position des Vorsprungs oder Bolzens nicht auf die vorgenannten Anordnungspunkte beschränkt.

Bevorzugt sitzt der Arm oder Hebel auf dem Kupplungsstück auf beziehungsweise übergreift das Kupplungsstück. Hierzu weist der Arm eine geeignete Ausformung auf, beispielsweise mit einem oder zwei das Kupplungsstück ganz oder teilweise um- oder übergreifenden Schenkeln oder Vorsprüngen beziehungsweise Verlängerungen. Die wie zuvor ausgeführte Schnellanschlusskupplung mit einem Arm/Hebel ist in einer bevorzugten Weiterbildung derart ausgeführt, dass eine Schwenkbewegung des Armes/Hebels beziehungsweise der am Arm/Hebel vorgesehenen oder mit Arm/Hebel verbundenen Führungskulisse in einer axialen Bewegung der Aufnahme oder Hülse beziehungsweise Halbhülse umsetzbar ist. Durch die Schwenkbewegung des Armes/Hebels und die damit verbundene axiale Bewegung der Aufnahmehülse oder Halbhülse sind das Kupplungsstück und das Kupplungsgegenstück gleichzeitig in die Verbindungsposition bringbar. Es wird hierdurch eine Verriegelung der beiden Medienleitungsendstücke miteinander erreicht. Hierbei ist günstiger Weise vorgesehen, dass in der Verbindungsposition die einander zugewandten Stirnflächen der Medienleitungsendstücke aneinander anliegen und die Aufnahme oder Hülse beziehungsweise Halbhülse einen Kontaktbereich der Stirnflächen ganz oder teilweise umschließt. Dies bringt den Vorteil mit sich, dass es zu einer Führung der Stirnflächen beziehungsweise der Medienleitungsendstücke kommt, so dass ein formschlüssiges Aufeinanderliegen der Stirnseiten sichergestellt ist und hiermit bereits eine Abdichtung der beiden Medienleitungsendstücke stattfindet.

In den Medienleitungsendstücken sind jeweils axial bewegliche Dichtstücke vorgesehen, über die ein im Inneren der Medienleitungsendstücke vorgesehener Mediendurchgang im entkoppelten Zustand der Medienleitungsendstücke abdichtbar und in der Verbindungsposition hingegen freigebbar ist. Die axiale Bewegung der Dichtstücke erfolgt zusammen mit dem Kontaktieren der Stirnflächen der Medienleitungsendstücke beziehungsweise in dem Moment, in dem die Medienleitungsendstücke aneinander anliegen. Dies wird durch die klauenartige Aufnahme beziehungsweise deren Bewegung, vermittelt durch die Schwenkbewegung des Armes/Hebels und der damit einhergehenden axialen Bewegung der Aufnahme, Hülse oder Halbhülse erreicht. Beim Verbringen in die Verbindungsposition erfolgt dabei bevorzugt dabei eine Bewegung wenigstens eines der Dichtstücke relativ zur Schnellanschlusskupplung. Die Medienleitungsendstücke sind derart ausgebildet, dass in einem ersten Medienleitungsendstück ein Dichtstück als federgelagerter Dichtkegel ausgebildet und axial im Medienleitungsendstück, das heißt in Richtung der Medienleitung, bewegbar ist. Diesem Dichtkegel ist eine erste Rückstellfeder zugeordnet, die sich im Medienleitungsendstück abstützt und beim Entkoppeln der Schnellanschlusskupplung ein Rückführen des Dichtkegels in die Dichtposition ermöglicht.

Eine Weiterbildung sieht vor, dass eines der Dichtstücke als federgelagerter oder im Mediendurchgang feststehender Stößel ausgebildet ist. Der Stößel ist mit dem Dichtkegel des anzukoppelnden Medienleitungsendstück in Wirkverbindung bringbar und bewegt während des Kopplungsvorganges und des Aufeinanderzubewegens der beiden Medienleitungsendstücke den Dichtkegel relativ zur Schnellanschlusskupplung, wobei die Rückstellfeder komprimiert und der Mediendurchgang freigegeben wird. Der Stößel schließt zunächst bündig mit der Stirnseite des Medienleitungsendstückes ab. Beim Verschieben der den Stößel umgebenden Hülse axial in Richtung der Medienleitung kommt es dann zum Freilegen des Stößels, der jedoch feststehend im Medienleitungsendstück angeordnet ist. Im Zuge des Anziehens des zweiten Medienleitungsendstückes über die klauenartige Aufnahme treten Stößel und Dichtkegel in Wirkverbindung und durch weiteres Verschieben wird über den feststehenden Stößel der Dichtkegel entgegen der Verbindungsrichtung der beiden Medienleitungsendstücke axial verschoben, wodurch der Mediendurchgang freigegeben wird. Dies erfolgt jedoch erst nachdem es zu einem dichten Aneinanderliegen der Stirnseiten der Medienleitungsendstücke gekommen ist, so dass hier keinerlei Möglichkeit besteht, dass das in den Medienleitungen geführte Medium am Kopplungspunkt austritt.

Auf dem Dichtkegel beziehungsweise dem Stößel ist bevorzugt ein Dichtkörper angeordnet, der den Mediendurchgang im entkoppelten Zustand sicher verschließt. Dieser Dichtkörper ist auf dem Dichtkegel beziehungsweise dem Stößel angeformt, angespritzt, angeklebt, aufgepresst oder aufvulkanisiert. Es wird somit eine Dichtmöglichkeit geschaffen, die ortstreu am Dichtkegel beziehungsweise Stößel verbleibt und hier eine zufriedenstellende, sichere Abdichtung des Medienleitungsendstückes im entkoppelten Zustand gewährleistet. Kommt es zur Ankopplung des Medienleitungsendstückes beziehungsweise zur Kopplung von zwei Medienleitungsendstücken, wird der Dichtkörper aus seinem Dichtsitz ausgehoben und gibt dann, wenn die übrigen Teile der Medienleitung beziehungsweise des Mediendurchganges dicht verschlossen sind, den Mediendurchgang frei und erlaubt so ein Strömen des Mediums.

In dem Medienleitungsendstück, das den feststehenden Stößel aufweist, ist bevorzugt eine den Stößel umschließende axial bewegliche, den Stößel in der Verbindungsposition freigebende Hülse vorgesehen. Diese Hülse ist entgegen der Kraft einer Rückstellfeder in Richtung der den Stößel aufweisenden, das erste Medienleitungsendstück tragenden Medienleitung verschiebbar. Kommt es zur Kopplung von zwei Medienleitungsendstücken, so dient der von der Hülse dann freigegebene Stößel bevorzugt zur Beaufschlagung des Dichtmittels, beispielsweise Dichtkegels, im zweiten Medienleitungsendstück, wobei der Dichtkegel, vermittelt über den Stößel, entgegen der Kraft der ersten Rückstellfeder in Richtung der das Medienleitungsendstück, das den Dichtkegel aufweist, tragenden Medienleitung verschiebbar ist.

Der in den Medienleitungsendstücken beziehungsweise dem Kupplungsstück oder Kupplungsgegenstück vorgesehene Mediendurchgang zeichnet sich günstiger Weise durch eine zylindrische und sich bevorzugt in Richtung der Stirnseite des Medienleitungsendstückes konisch verjüngende Innenwand aus. Diese Innenwand, insbesondere der sich konisch verjüngende Teil, dient unter anderem als Dichtsitz für den am Dichtkegel, der insbesondere auch eine konische, auf die Innenwandgeometrie abgestimmte Form aufweisen kann, angeordneten Dichtkörper. Im abgedichteten, das heißt entkoppelten Zustand, wird der Dichtkörper durch die Rückstellfeder in den konisch verjüngten Bereich eingedrückt und dichtet über den sich an die Innenwand anlegenden und in der Formgebung bevorzugt auf die Innenwand abgestimmten Dichtkörper den Mediendurchgang ab. Weiter verbessert wird der Dichtsitz beziehungsweise das Eindrücken des Dichtkörpers in den Dichtsitz durch das in der Medienleitung anstehende, unter Umständen druckbeaufschlagte Medium.

Der Dichtkegel, der Stößel oder der Dichtkörper sind bevorzugt ganz oder teilweise formkomplementär zur Innenwand ausgebildet. Unabhängig davon, ob dieser am Dichtkegel oder am Stößel vorgesehen ist, legt sich insbesondere an der Innenwand des Mediendurchganges beziehungsweise der Medienleitungsendstücke an und dichtet hier formschlüssig ab. Der Dichtkörper selbst, der wie bereits ausgeführt auf dem Dichtkegel, das heißt, dem in einem ersten Medienleitungsendstück vorgesehenen Dichtmittel oder dem Stößel, das heißt, in einem mit dem ersten in Verbindung zu bringenden Medienleitungsendstück vorgesehenen Stößel angeformt, insbesondere aufvulkanisiert, angespritzt, angeklebt, aufgepresst oder aufgedrückt ist, ist bevorzugt ringartig ausgebildet. Die Ringinnenseite des ringartig ausgebildeten Dichtkörper liegt dabei auf dem Dichtkegel beziehungsweise dem Stößel auf oder an, während die Ringaußenseite an die Innenwand des Medienleitungsendstückes beziehungsweise des Mediendurchganges in der Formgebung angepasst ist und im entkoppelten Zustand zur Abdichtung des Mediendurchganges anliegt.

Die Ringaußenseite kann dabei eine im Querschnitt keilförmige Form aufweisen, mit einer kürzeren, an der Innenwand anliegenden und einer längeren, sich entlang des Dichtkegels beziehungsweise Stößels erstreckenden Seite ausgebildet sein. Die Formgebung des Dichtkörpers wird dabei an die Strömungsbedingungen in der Medienleitung angepasst, so dass es, bei geöffnetem beziehungsweise freigegebenem Mediendurchgang zu einem ungehinderten Medienfluss kommen kann. Das Material des Dichtkörpers ist bevorzugt auf die Art des Mediums angepasst, denkbar und verwendbar sind hier Kunststoffe, Elastomere oder sonstige geeignete Materialien, die eine medienangepasste Korrosions-, Temperatur- oder Chemikalienresistenz aufweisen. Günstiger Weise wird ein inertes Material verwendet, das zudem durch Vulkanisieren, Aufspritzen oder Aufkleben mit dem Dichtkegel beziehungsweise Stößel verbindbar ist, um eine dauerhafte Dichtmöglichkeit zur Verfügung zu stellen.

In der Zeichnung ist die Erfindung insbesondere in einem Ausführungsbeispiel schematisch dargestellt.

Es zeigen:
- Fig. 1a und Fig. 1b: eine Ausführungsform der erfindungsgemäße Schnellanschlusskupplung im gekoppelten Zustand in Seitendarstellung und seitlicher Schnittdarstellung, entlang eines Schnittes der in Fig.1a eingezeichneten Linie A
- Fig. 2a und 2b: eine weitere Ausführungsform der Schnellanschlusskupplung im entkoppelten Zustand, jeweils in Seitenansicht beziehungsweise seitlicher Schnittdarstellung
- Fig. 3: eine bevorzugte Ausführungsform einer in der Schnellanschlusskupplung vorgesehenen Dichtanordnung in Schnittdarstellung

In den Figuren sind gleiche oder einander entsprechende Elemente jeweils mit den gleichen Bezugszeichen bezeichnet und werden daher, sofern nicht zweckmäßig, nicht erneut beschrieben.

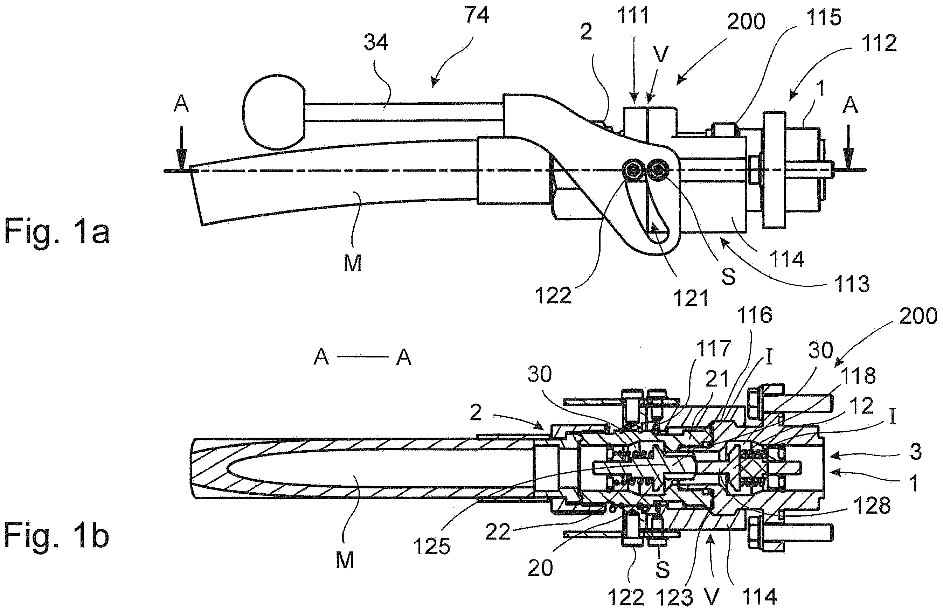

Fig. 1a zeigt eine Schnellanschlusskupplung 200 in Seitenansicht. Im Ausführungsbeispiel sind die beiden Medienleitungsendstücke 1,2 einer ein Medium, beispielsweise ein Gas oder eine Flüssigkeit führenden Medienleitung M im gekoppelten Zustand dargestellt. Die Medienleitungsendstücke 1,2 beziehungsweise die Schnellanschlusskupplung 200 weisen hierzu ein Kupplungsstück 111 und ein mit diesem in Anlage gebrachtes Kupplungsgegenstück 112 auf. Das Kupplungsgegenstück 112 verfügt über einen ring- oder flanschartig ausgeführten Vorsprung 115, der mit einer am Kupplungsstück 111 angeordneten, beweglichen Hülse 114 in Eingriff gebracht ist. Im Inneren der Hülse 114 ist, wie aus Fig. 1b ersichtlich, eine Nut 116 angeordnet, die dazu dient, den Vorsprung 115 zu umgreifen beziehungsweise zu hintergreifen, um eine formschlüssige Verbindung zwischen Kupplungsstück 111 und Kupplungsgegenstück 112 herzustellen. Die Hülse 114 ist nach Art einer Halbhülse ausgeführt und umgreift den Vorsprung 115 am Kupplungsgegenstück 112 klauenartig. Nach Verbringen des Armes 34 der Schließvorrichtung in die in Fig. 1a gezeigte Verriegelungsposition V werden die Stirnseiten 123 (vgl. Fig. 1b) der Medienleitungsendstücke 1,2 aneinander angelegt und es kommt dabei gleichzeitig, insbesondere beim Verschwenken der Führungskulisse 121, die am Arm 34 angeordnet ist, zum Betätigen der im Inneren der Medienleitungsendstücke 1,2 vorgesehenen Dichtvorrichtung. Hierbei kommt es dann zur Freigabe des Mediendurchganges 3 im Inneren der Medienleitungsendstücke 1,2.

Die Führungskulisse 121 ist an dem schwenkbar an der Hülse 114, die gleichzeitig als Aufnahme 113 für den Vorsprung 115 dient, angelenkt. Dort befindet sich die Schwenkachse S. Das Medienleitungsendstück 2 beziehungsweise das Kupplungsstück 111 stellt einen Bolzen 122 zur Verfügung, der in der Führungskulisse 121 aufgenommen ist und über den eine Führung erfolgt. Die Schwenkbewegung des Armes 34 wird einer Axialbewegung der Hülse 114 in Richtung der Medienleitung M umgesetzt und dabei der Vorsprung 115 ebenfalls axial in Richtung der Medienleitung M bewegt. Die Stirnseiten 123 der Medienleitungsendstücke 1,2 werden dabei aufeinander zu bewegt, so dass diese am Ende der Schwenkbewegung des Armes 34 dichtend aneinander anliegen. Gleichzeitig mit dem Verschwenken des Armes 34 und dem axialen Verschieben der Hülse 114 kommt es im Inneren der Medienleitungsendstücke 1,2 zur Betätigung der dort vorgesehenen Dichtmittel beziehungsweise Dichtstücke I. Diese sind, wie aus Fig. 1b entnehmbar ist, nach Art eines Stößels 20 beziehungsweise eines mit dem Stößelschaft 128 in Eingriff bringbaren Dichtstück I ausgebildet. Im Zuge der Axialverschiebung der Hülse 114 und der damit einhergehenden Axialbewegung des Kupplungsstückes 111 beziehungsweise Kupplungsgegenstückes 112 sowie der daran angeordneten Medienleitungsendstücke 1,2 kommt es im Inneren der Medienleitungsendstücke 1,2 zur Betätigung der dort vorgesehenen Dichtstücke I. Nach bündigem Aufeinanderliegen der Stirnflächen 123 der Medienleitungsendstücke 1,2 erfolgt zur Freigabe des Mediendurchganges 3 im Inneren der Medienleitungsendstücke 1,2 zur Verschiebung der Dichtstücke I entgegen der Kraft einer Rückstellfeder beziehungsweise Dichtelementfeder 12 und letztlich zur Freigabe des Mediendurchganges 3 da die Dichtstücke I aus ihren jeweiligen Dichtsitzen ausgehoben werden. Durch Axialverschiebung der Medienleitungsendstücke 1,2 kommt es zur Betätigung der Hülse 21 im Inneren des Medienleitungsendstückes 2, wodurch das Druckstück 125 freigegeben wird und mit dem Stößelschaft 128 in Wirkverbindung tritt, so dass bei Abschluss der Kopplung des Kupplungsstückes 111 mit dem Kupplungsgegenstück 112 auch eine Freigabe des Mediendurchganges 3 einhergeht. Diese Freigabe erfolgt jedoch erst dann, wenn die beiden Stirnflächen 123 bündig aufeinanderliegen und bereits hier eine Abdichtung zur Verfügung stellen.

Eine leckagefreie Kupplung kann somit zur Verfügung gestellt werden, da der Mediendurchgang 3 erst dann geöffnet wird, wenn die Stirnflächen 123 dichtend aufeinander liegen. Zusätzlich können an den Stirnflächen 123 weitere Dichtmittel, beispielsweise ein Dichtring oder dergleichen angeordnet werden, um die Dichtwirkung weiter zu verbessern. Vorteil der in den Fig. 1a und 1b gezeigten Schnellanschlusskupplung 200 ist es, dass bereits bei Beginn des Kupplungsvorganges eine dichtende Verbindung zwischen den Stirnflächen 123 hergestellt wird, und gleichzeitig mit dem Kupplungsvorgang beziehungsweise der Betätigung der Schließvorrichtung 74 und dem Axialbewegen der Hülse 114 ein Öffnen beziehungsweise Freigeben des Mediendurchganges 3 erfolgt. Somit ist gewährleistet, dass ein zu jeder Zeit dichter Anschluss der Medienleitungsendstücke 1,2 stattfindet und gleichzeitig während des Verriegelungsvorganges eine Freigabe des Mediendurchganges 3 erfolgt. Im Gegensatz zu herkömmlichen Anschlusskupplungen, bei denen die beiden Vorgänge getrennt beziehungsweise sequentiell erfolgen, wird die Verbindung und Freigabe des Mediendurchganges bei der erfindungsgemäßen Schnellanschlusskupplung 200 zeitgleich durchgeführt. Dies ermöglicht zum einen das schnell Ankuppeln von Medienleitungen M, zum anderen eine leckagefreie Kupplung, bei der der Austritt von Medium aus den Medienleitungen M wirksam unterbunden wird.

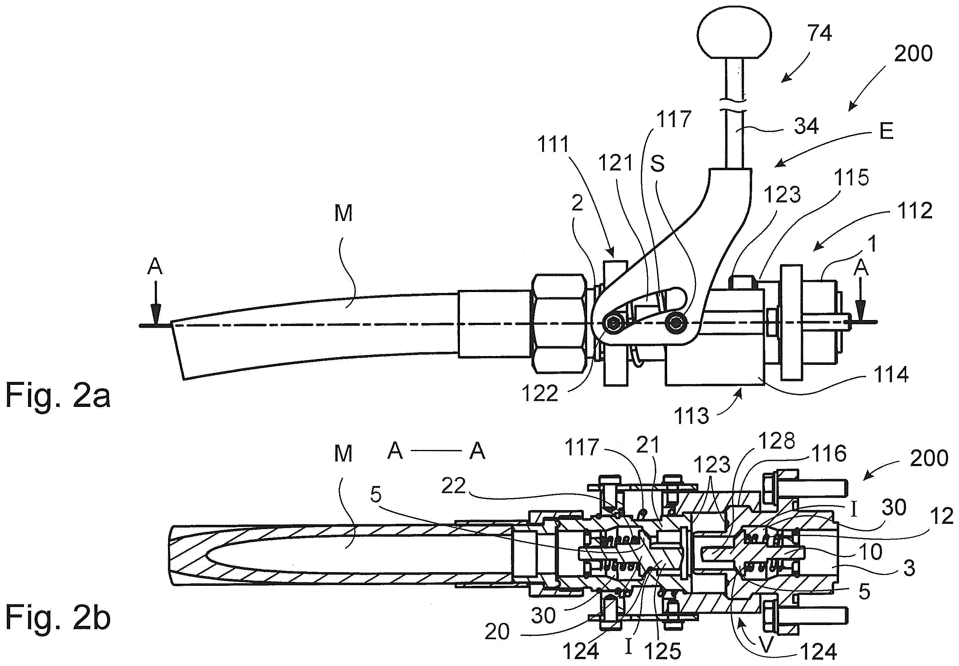

Die Fig. 2a,2b zeigen die im Zusammenhang mit Fig. 1a,1b beschriebene Schnellanschlusskupplung 200 im entkoppelten Zustand. Hierbei ist die Schließvorrichtung 74 in die Entriegelungsposition E verschwenkt, die Hülse 114, die die Aufnahme 113 für den Vorsprung 115 am Kupplungsgegenstück 112 das am Medienleitungsendstück 1 angeordnet ist, zur Verfügung stellt, ist axial verschoben. Die Verschiebung wird begünstigt durch die Feder 117, die auf die Hülse 114 wirkt. Beim Entriegeln schiebt die Hülse 114 den in der Hülse 114 aufzunehmenden Vorsprung 115 und damit das Kupplungsgegenstück 112 in axialer Richtung von der Medienleitung M weg und gibt dabei das Medienleitungsendstück 1 frei. Das Medienleitungsendstück 1 beziehungsweise der Vorsprung 115 kann jetzt aus der Aufnahme 113 entnommen werden, und die Medienleitung M somit vom Medienleitungsendstück 1 abgehoben werden. Gleichzeitig mit der Entriegelung und Freigabe des Medienleitungsendstückes 1 erfolgt im Inneren (vgl. 2b) ein Abschließen des dort vorgesehenen Mediendurchganges 3. Die Dichtstücke I liegen dann, aufgrund der Beaufschlagung durch die Stößelfeder 22 beziehungsweise die Dichtelementfeder 12 in ihrem Dichtsitz 124 und dichten den Mediendurchgang 3 somit wirksam ab. Mit Verschieben der Hülse 114 kommt es im Inneren der Medienleitungsendstücke 1,2 zum Verschieben der dort vorgesehenen Hülse 114. Hierdurch wird der Stößel 20 beziehungsweise das an diesem vorgesehene Druckstück 125 vom Stößelschaft 128 (vgl. Fig. 1b) abgehoben und der Stößelschaft 128 damit freigegeben. Vermittelt durch die Dichtelementfeder 12 kann das Dichtstück I nunmehr in axialer Bewegung auf den Dichtsitz 124 zu bewegt werden, um dort den Mediendurchgang 3 abzuschließen. Das Dichtstück I beziehungsweise ein dort angeordneter Dichtkörper 5, der beispielsweise auf das Dichtstück I aufgespritzt, aufgebracht, aufvulkanisiert, aufgesteckt oder in sonstiger Art und Weise dort angebunden sein kann, liegt somit an der konisch zulaufenden Innenwand 30 des Medienleitungsendstückes 1 an und dichtet hiergegen ab. Ebenfalls einen Dichtkörper 5 weist im zweiten Medienleitungsendstück 2, das die Schließvorrichtung 74 trägt, der dort vorgesehene Stößel 20 auf. Auch hier ist der Dichtkörper 5 auf dem Stößel 20 beziehungsweise dem an der konischen Innenwand 30 des Medienleitungsendstückes 1 anliegende Teil des Stößels 20 mit dem Dichtkörper 5 belegt beziehungsweise der Dichtkörper 5 dort aufgebracht, aufgeklebt, aufvulkanisiert oder in sonstiger Art und Weise angeordnet. Vermittelt durch die Stößelfeder 22 wird der Stößel 20 in den Dichtsitz eingepresst und dichtet auch hier die Medienleitung M ab, so dass es zu keinem Austritt von Medium kommen kann. Der Abschluss des Mediendurchganges 3 wird im Zuge des Entriegelungsvorganges zuerst durchgeführt. Zeitgleich kommt es zur Freigabe der Medienleitungsendstücke 1,2, so dass diese getrennt werden können. Bis zum letztlichen Abschluss des Mediendurchganges im Inneren der Medienleitungsendstücke 1,2 bleiben jedoch die Stirnflächen 123 der Medienleitungsendstücke 1,2 bündig in Kontakt, und dichten hier den Verbindungsbereich wirksam ab.

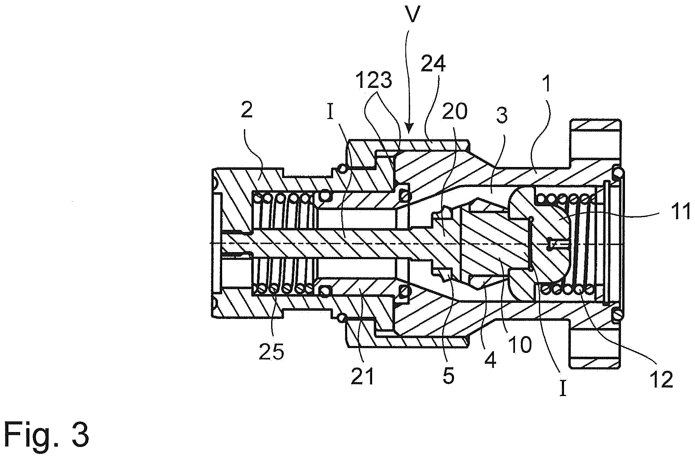

Fig. 3 zeigt eine weitere Ausführungsform einer Dichtanordnung im Inneren der Medienleitungsendstücke 1,2. Diese weist eine Hülse 114 auf, die über die Feder 117 beaufschlagt ist.

Die in Fig. 3 dargestellte Dichtanordnung ist ohne die Verriegelungs- beziehungsweise Schließvorrichtung 74, wie diese in den Fig. 1a, 1b, 2a und 2b dargestellt ist, gezeigt. Durch Verschieben der Medienleitungsendstücke 1,2 in axialer Richtung kommt es in dem Medienleitungsendstück 2, das in Fig. 3 links dargestellt ist, zum Verschiebung entgegen der Kraft einer Hülsenfeder 22 der dort vorgesehenen Abschlusshülse 21, im Gegenzug bewegt sich der Dichtkegel 10, der mit dem Stößel 20 in Wirkverbindung steht, in axialer Richtung im Medienleitungsendstück 1, in Fig. 3 rechts dargestellt und komprimiert hierbei die Dichtelementfeder 12. In diese steht das Kreuzstück 11 ein, das einen Mediendurchfluss ermöglicht und gleichzeitig eine Führung für den Dichtkegel 10 zur Verfügung stellt. Dichtkegel 10 und Stößel 20 verfügen im Ausführungsbeispiel über Dichtkörper 5,4, die auf dem Stößel 20 beziehungsweise dem Dichtkegel 10 aufgespritzt oder aufvulkanisiert sind und in der Verriegelungsposition den Mediendurchgang 3 abdichten. Der in Fig. 3 dargestellte Rand 24 umschließt das vordere Ende des Medienleitungsendstückes 1 und nimmt dieses auf. Die beiden Stirnflächen 123 der Medienleitungsendstücke 1,2 liegen in der Verriegelungsposition V, die in Fig. 3 dargestellt ist dichtend aneinander, so dass es hier nicht zum Austritt von Medium kommen kann. Der Mediendurchgang 3 wird erst dann geöffnet, wenn die Stirnflächen 123 aneinander liegen. Die Medienleitungsendstücke 1,2 sind mit Medienleitungen (in Fig. 3 nicht dargestellt) verbunden. Die Erfindung ist nicht auf die in den Fig. 1b, 2b und 3 dargestellten Dichtanordnungen beschränkt. Selbstverständlich denkbar und möglich sind sämtliche weiteren, in diesem Zusammenhang realisierbaren Ausführungsformen, die gleichermaßen von der Erfindung umfasst sind. Auch bleibt die Erfindung nicht auf eine Schließvorrichtung 74, die einen Arm 34 aufweist, beschränkt. Denkbar und möglich ist hierbei auch ein Gestänge, das die Führung des Kupplungsstückes 111 beziehungsweise Kupplungsgegenstückes 112 bewirkt. Auch ein Schieber oder eine sonstige geeignete Form eines

Betätigungsmittels für die Schließvorrichtung 74 ist gleichermaßen mit der Erfindung realisierbar und von dieser selbstverständlich umfasst.

## Patentansprüche

1. Schnellanschlusskupplung umfassend ein erstes Medienleitungsendstück, ein zweites Medienleitungsendstück, ein an dem ersten Medienleitungsendstück vorgesehenes Kupplungsstück und ein mit dem Kupplungsstück in Wirkverbindung bringbares, an dem zweiten Medienleitungsendstück vorgesehenes Kupplungsgegenstück, wobei über Kupplungsstück (111) und Kupplungsgegenstück (112) ein Koppeln und fluidisches Verbinden von erstem und zweitem Medienleitungsendstück (1,2) gleichzeitig durchführbar ist, wobei das Kupplungsgegenstück (112) durch das Kupplungsstück (111) ergreifbar und in eine Verbindungsposition (V) bringbar ist, und ein im Innern der Medienleitungsendstücke (1, 2) vorgesehener Schließmechanismus der Schnellanschlusskupplung vorhanden ist, wobei die Schnellanschlusskupplung dazu ausgebildet ist, dass gleichzeitig mit einer Herstellung eines Dichtkontaktes zwischen Kupplungsstück (111) und Kupplungsgegenstück (112) eine Betätigung des Schließmechanismus zu dessen Freigabe erfolgt, wobei das Kupplungsstück (111) eine Aufnahme (113) für das Kupplungsgegenstück aufweist und die Aufnahme (113) das Kupplungsgegenstück (112) wenigstens abschnittsweise um- oder hintergreift, wobei die Aufnahme (113) als in axialer Richtung und im Bezug auf das Kupplungsstück (111) verschiebbare Hülse (114) oder Halbhülse ausgebildet ist, wobei die klauenartige Aufnahme (113) gegen die Kraft einer Feder (117) der Schnellanschlusskupplung bewegbar angeordnet ist, wobei sich die Feder (117) in oder an dem dem Kupplungsstück (111) zugeordneten Medienleitungsendstück (1,2) abstützt, und/oder ein von einem Endbereich der Feder (117) umgriffener oder in den Endbereich der Feder (117) einstehender Vorsprung vorgesehen ist,
**dadurch gekennzeichnet, dass**
die Feder (117) um das Kupplungsstück (111) angeordnet ist, und dass
eine Schließvorrichtung (74) vorgesehen ist, die eine Verbindung aus Kupplungsgegenstück (112) und Kupplungsstück (111) in der Verbindungsposition (V) festlegt und als Schließvorrichtung (74) ein an der Aufnahme (113) angelenkter, eine Schwenkachse (S) aufweisender Arm (34) mit wenigstens einer Führungskulisse (121) vorgesehen ist, wobei in der Führungskulisse (121) wenigstens ein an dem Kupplungsstück (111) oder an dem dem Kupplungsstück (111) zugeordneten Medienleitungsendstück (1,2) vorgesehener Vorsprung oder Bolzen (122) geführt ist.

2. Schnellanschlusskupplung nach einem der vorhergehenden Ansprüche, **dadurch gekennzeichnet, dass** an dem Kupplungsgegenstück (112) ein flanschartig ausgebildeter, sich radial erstreckender Vorsprung (115) oder eine Einschnürung vorgesehen ist, wobei der Vorsprung (115) oder die Einschnürung mit einer in der Aufnahme (113) vorgesehenen Vertiefung oder Nut (116) in Eingriff bringbar ist.

3. Schnellanschlusskupplung nach einem der vorhergehenden Ansprüche, **dadurch gekennzeichnet, dass** in der Verbindungsposition (V) die einander zugewandten Stirnflächen (123) der Medienleitungsendstücke (1,2) in Dichtkontakt aneinander anliegen und die Aufnahme (113) einen Kontaktbereich der Stirnflächen (123) ganz oder teilweise umschließt.

4. Schnellanschlusskupplung nach einem der vorhergehenden Ansprüche, **dadurch gekennzeichnet, dass** in den Medienleitungsendstücken (1,2) jeweils axial bewegliche Dichtstücke (I) vorgesehen sind und über die Dichtstücke (I) ein im Innern der Medienleitungsendstücke (1,2) vorgesehener Mediendurchgang im entkoppelten Zustand der Medienleitungsendstücke (1,2) abdichtbar und in der Verbindungsposition (V) freigebbar ist.

5. Schnellanschlusskupplung nach Anspruch 4, **dadurch gekennzeichnet, dass** ein Dichtstück (I) als federgelagerter oder im Mediendurchgang feststehender Stößel (20) ausgebildet ist, wobei der Stößel (20) mit dem Dichtkegel (10) in Wirkverbindung bringbar ist.

6. Schnellanschlusskupplung nach einem der vorhergehenden Ansprüche, **dadurch gekennzeichnet, dass** auf dem Dichtkegel (10) und/oder dem Stößel (20) ein Dichtkörper (5) angeordnet, insbesondere aufvulkanisiert, angeformt, angespritzt, angeklebt, aufgepresst oder aufgedrückt ist.

7. Schnellanschlusskupplung nach einem der Ansprüche 5 oder 6, **dadurch gekennzeichnet, dass** eine den Stößel (20) umschließende, axial bewegliche, den Stößel (20) in der Verbindungsposition (V) freigebende Abschlusshülse (21) vorgesehen ist und die Abschlusshülse (21) entgegen der Kraft einer Abschlusshülsenfeder (22) in Richtung der das erste Medienleitungsendstück (1,2) tragenden Medienleitung (M) verschiebbar ist.

8. Schnellanschlusskupplung nach einem der Ansprüche 5 bis 7, **dadurch gekennzeichnet, dass** über den von der Hülse (21) freigegebenen Stößel (20) eine Beaufschlagung des Dichtkegels (10) vorgesehen ist, wobei der Dichtkegel (10) entgegen der Kraft der Dichtelementfeder (12) in Richtung der das zweite Medienleitungsendstück (1,2) tragenden Medienleitung (M) verschiebbar ist.

9. Schnellanschlusskupplung nach einem der Ansprüche 4 bis 8, **dadurch gekennzeichnet, dass** der Mediendurchgang eine zylindrische und sich bevorzugt in Richtung der Stirnseite des Medienleitungsendstückes (1,2) anschließenden Medienleitung (M) konisch verjüngende Innenwand (30, 31) aufweist.

10. Schnellanschlusskupplung nach einem der Ansprüche 4 bis 9, **dadurch gekennzeichnet, dass** der Dichtkegel (10), der Stößel (20) und/oder der Dichtkörper (5) ganz oder teilweise formkomplementär zur Innenwand ausgebildet ist, wobei der Dichtkörper (5) an die Innenwand anlegbar ist.

11. Schnellanschlusskupplung nach einem der Ansprüche 4 bis 10, **dadurch gekennzeichnet, dass** der Dichtkörper (5) ringartig ausgebildet ist und eine Ringinnenseite des Dichtkörper (5) auf dem Dichtkegel (10) oder dem Stößel (20) anbeziehungsweise aufliegt.

## Claims

1. Rapid release coupling comprising a first medium conducting end piece, a second medium conducting end piece, a coupling piece provided at the first medium conducting end piece, and a coupling counter piece that is provided at the second medium conducting end piece and can be actively connected to the coupling piece, wherein via coupling piece (111) and coupling counter piece (112) coupling and fluid connection of first and second medium conducting end piece (1, 2) can be carried out simultaneously, wherein the coupling counter piece (112) can be gripped by the coupling piece (111) and be brought into a linkage position (V), and inside the medium conducting end pieces (1, 2) a locking system of the rapid release coupling is provided, wherein the rapid release coupling is designed such during production of a sealing contact between coupling piece (111) and coupling counter piece (112) the locking system is activated for its release, wherein the coupling piece (111) has a mounting device (113) for the coupling counter piece, and the mounting device (113) engages around or behind the coupling counter piece (112) at least in sections, wherein the mounting device (113) is designed as sleeve (114) or semi-sleeve that can shift in axial direction and with respect to the coupling piece (111), wherein the claw-like mounting device (113) is arranged movably against the power of a spring (117) of the rapid release coupling, wherein the spring (117) is supported in or at medium conducting end piece (1, 2) allocated to the coupling piece (111), and/or a projection is provided that is encompassed by the end area of the spring (117) or projects in the end area of the spring (117), **characterized in that** the spring (117) is arranged surrounding the coupling piece (111), and that a locking device (74) is provided defining a connection of coupling counter piece (112) and coupling piece (111) in the linkage position (V), and as locking device (74) an arm (34) with at least one guiding crank (121) is provided that is applied to the mounting device (113) and has a swiveling axle (S), wherein in the guiding crank (121) at least one projection or bolt (122) at the coupling piece (111) or at the medium conducting end piece (1, 2) allocated to the coupling piece (111) is guided.

2. The rapid release coupling according to any one of the preceding claims, **characterized in that** at the coupling counter piece (112) a flange-like, radially extending projection (115) or a necking is provided, wherein the projection (115) or the necking can engage with an indentation or groove (116) provided in the mounting device (113).

3. The rapid release coupling according to any one of the preceding claims, **characterized in that** in the linkage position (V) the front faces (123) of the medium conducting end pieces (1, 2) facing each other are in sealing contact, and the mounting device (113) encircles a contact area of the front faces (123) entirely or partly.

4. The rapid release coupling according to any one of the preceding claims, **characterized in that** in each of the medium conducting end pieces (1, 2) axially moving sealing parts (I) are provided, and via the sealing parts (I) a medium passage provided inside the medium conducting end pieces (1, 2) can be sealed when the medium conducting end pieces (1, 2) are decoupled, and be released in the linkage position (V).

5. The rapid release coupling according to claim 4, **characterized in that** a sealing part (I) is designed as tappet (20) either spring-mounted or stationary in the medium passage, wherein the tappet (20) can be brought into active connection with the conical nipple (10).

6. The rapid release coupling according to any one of the preceding claims, **characterized in that** on the conical nipple (10) and/or the tappet (20) a sealing body (5) is arranged, in particular cured-on, formed, injected, glued, pressed, or imprinted.

7. The rapid release coupling according to either claim 5 or 6, **characterized in that** an end sleeve (21), that encircles the tappet (20), moves axially, and releases the tappet (20) in the linkage position (V), is provided, and the end sleeve (21) can be shifted against the power of an end sleeve spring (22) in the direction of the medium conduct (M) carrying the first medium conducting end piece (1, 2).

8. The rapid release coupling according to any one of the claims 5 to 7, **characterized in that** via the tappet (20) released by the sleeve (21) the conical nipple (10) can be impinged, wherein the conical nipple (10) can be shifted against the force of the sealing element spring (12) in the direction of the medium conduct (M) carrying the second medium conducting end piece (1, 2).

9. The rapid release coupling according to any one of the claims 4 to 8, **characterized in that** the medium passage has a cylindrical interior wall (30, 31) that conically tapers preferably towards the front face of the medium conduct (M) connected to the medium conducting end piece (1, 2).

10. The rapid release coupling according to any one of the claims 4 to 9, **characterized in that** the conical nipple (10), the tappet (20), and/or the sealing body (5) are designed entirely or partly complementarily to the shape of the interior wall, wherein the sealing body (5) can be brought into contact with the interior wall.

11. The rapid release coupling according to any one of the claims 4 to 10, **characterized in that** the sealing body (5) is designed like a ring, and an interior side of the ring of the sealing body (5) is in contact or supported on the conical nipple (10) or the tappet (20).

## Revendications

1. Dispositif d'accouplement à raccord rapide comprenant un premier embout de conduite de fluide, un deuxième embout de conduite de fluide, un élément de couplage prévu au niveau du premier embout de conduite de fluide et un contre élément de couplage situé au niveau du deuxième embout de conduite de fluide et pouvant réaliser un couplage effectif avec l'élément de couplage, de façon à ce qu'un couplage et la réalisation d'une conduite pour un fluide peuvent être produits en même temps entre le premier et le deuxième embouts de conduite (1, 2) à l'aide de l'élément de couplage (111) et du contre élément de couplage (112), et à ce que le contre élément de couplage (112) peut être agrippé et placé dans une position de connexion (V) par l'élément de couplage (111) et à ce qu'un mécanisme de serrage du dispositif d'accouplement à raccord rapide est situé à l'intérieur des embouts de conduite (1,2), et à ce que le dispositif d'accouplement à raccord rapide est configuré de sorte que parallèlement à la réalisation d'un contact étanche entre l'élément de couplage (111) et le contre élément de couplage (112), le mécanisme de serrage est actionné pour son desserrage, et à ce que l'élément de couplage (111) possède un récepteur (113) recevant le contre élément de couplage (112) et à ce que le récepteur (113) entoure le contre élément de couplage (112) au moins partiellement, et à ce que le récepteur (113) est configuré comme une douille (114) ou semi-douille axialement mobile par rapport à l'élément de couplage (111), et à ce que le récepteur (113) en forme de griffes est fixé de façon mobile contre la force d'un ressort (117) du dispositif d'accouplement à raccord rapide, et à ce que le ressort (117) s'appuie à l'intérieur ou contre l'embout de conduite (1,2) correspondant à l'élément de couplage (111) et/ou ence qu'une excroissance est prévue, entourée par l'extrémité du ressort (117) ou entrant à l'intérieur de l'extrémité du ressort (117), **caractérisé en ce que** le ressort (117) est prévu autour de l'élément de couplage (111) et **en ce qu'**un dispositif de serrage (74) est prévu, immobilisant une connexion entre le contre élément de couplage (112) et l'élément de couplage (111) dans la position de connexion (V) et **en ce que** le dispositif de serrage (74) est réalisé par un bras (34) articulé autour d'un axe de pivotement (8) et actionné par le récepteur (113) comportant au moins un coulisseau de guidage (121) et **en ce qu'**au moins une excroissance ou goupille (122) est guidée au niveau de l'élément de couplage (111) ou au niveau de l'embout de conduite (1,2) correspondant à l'élément de couplage (111).

2. Dispositif d'accouplement à raccord rapide selon la revendication précédente, **caractérisé en ce qu'**une excroissance (115) en forme de bride, orientée radialement ou une gorge est située au niveau du contre élément de couplage (112) de façon à ce que l'excroissance (115) ou la gorge peuvent être mis en interaction avec une rainure ou une gorge (116) du récepteur (113) .

3. Dispositif d'accouplement à raccord rapide selon une des revendications précédentes, **caractérisé en ce qu'**en position de connexion (V) les faces frontales (123) des embouts de conduite (1,2) forment un contact étanche et **en ce que** le récepteur (113) renferme complètement ou partiellement la zone de contact des faces frontales (123).

4. Dispositif d'accouplement à raccord rapide selon une ou plusieurs des revendications précédentes, **caractérisé en ce que** des éléments d'étanchéité (I) axialement mobiles sont prévusà l'intérieur des embouts de conduite (1,2) afin d'ouvrir en position (V) et de fermer en position découplée le passage de fluide à l'intérieur des embouts de conduite (1,2).

5. Dispositif d'accouplement à raccord rapide selon la revendication 4, **caractérisé en ce que** l'élément d'étanchéité (I) est un piston (20) monté sur ressort ou immobile à l'intérieur du passage de liquide de façon à ce que le piston (20) peut être mis en interaction avec le cône d'étanchéité (10).

6. Dispositif d'accouplement à raccord rapide selon une des revendications précédentes, **caractérisé en ce qu'**un corps d'étanchéité (5) est situé et en particulier fixé par vulcanisation, par déformation, par collage, par fixation sous pression forte ou légère sur le cône d'étanchéité et/ou sur le piston (20).

7. Dispositif d'accouplement à raccord rapide selon une des revendications 5 ou 6, **caractérisé en ce qu'**une douille d'extrémité (21) est prévue enfermant le piston (20), axialement mobile et débloquant le piston (20) dans la position de connexion (V) et **en ce que** la douille d'extrémité (21) peut être déplacée selon la direction de la conduite de fluide (M) portant le premier embout de conduite (1, 2) contre la force d'un ressort de douille d'extrémité (22).

8. Dispositif d'accouplement à raccord rapide selon une des revendications 5 à 7, **caractérisé en ce que** le cône d'étanchéité (10) est actionné via le piston (20) débloqué par la douille (21) de façon à ce que le cône d'étanchéité (10) peut être déplacé contre la force du ressort d'élément d'étanchéité (12) selon la direction de la conduite de fluide (M) portant le deuxième embout de conduite (1, 2).

9. Dispositif d'accouplement à raccord rapide selon une des revendications 4 à 8, **caractérisé en ce que** le passage de fluide possède un passage délimité par une paroi intérieure, se réduisant de façon conique en direction de la face frontale de l'embout de conduite (1, 2) de la conduite de fluide (M).

10. Dispositif d'accouplement à raccord rapide selon une des revendications 4 à 9, **caractérisé en ce que** le cône d'étanchéité (10), le piston (20) et/ou le corps d'étanchéité (5) possèdent des formes correspondantes à celles de la paroi intérieure de façon à ce que le corps d'étanchéité (5) peut s'appliquer contre la paroi intérieure.

11. Dispositif d'accouplement à raccord rapide selon une des revendications 4 à 10, **caractérisé en ce que** le corps d'étanchéité (5) possède une forme d'annulaire et **en ce que** la face intérieure du corps d'étanchéité (5) s'applique contre ou sur le cône d'étanchéité (10) ou le piston (20).
